# EUROPEAN PATENT APPLICATION

(11) **EP 1 256 864 A1**
(43) Date of publication of application: **13.11.2002**
(21) Application number: 01111370.1
(22) Date of filing: 09.05.2001
(51) Int. Cl.: G06F 1/00, H04L 12/14

(54) **Clearing network for controlling premium anonymous internet sessions**

(71) Applicant: IP-Control GmbH, 35440 Linden (DE)
(72) Inventor: Rüffler, Dieter, C/O IP-Control, 35440 Linden (DE)
(74) Representative: Körber, Martin, Dipl.-Phys.

(57) **Abstract**

The present invention relates to clearing network for controlling premium anonymous internet sessions. Particularly, the present invention relates to a session management software for managing the delivery of content from a content provider (4) to a consumer (3) optional via an application service provider (1) in association with payment services in a communication network, whereby said session management software, when loaded in a memory of a session manager computer system, is adapted to perform the following steps:
receiving a content request from a consumer (3),
generating a session token (17) for said consumer (3) depending on budget information relating to a content delivery budget for said consumer, and
transmitting said session token to said consumer (3).

## Description

The present invention is directed to the field of electronic commerce, and more particularly, to the field of facilitating registration free authorizations for access to premium content or retail business in a communication network such as the internet.

The potential of funding Internet services out of income from advertising is to a large extent exhausted. Direct financing of services is difficult due to the lack of convenient payment services. Customers reject subscriptions to innovative and new services if they do not realize the immediate and long-term benefits. For a content or service Provider uniting a critical mass of internet service providers with well-established customer relationships is too cost-intensive. Thus content billing is not an option for innovative Internet services. There is no alternative to the implementation of ePayment services.

Transactions without previous registrations are similar to the positive characteristics of cash in public life. A transition of these features to the common use in public networks is the goal of the micro payment initiatives like Millicent, Minipay and Digicash. The tricks needed to avoid registration or to exploit an existing registration lead to solutions with breaks of media and high transaction fees which reduce the disbursements to service or content providers below profitable limits.

The customer of a micro payment operator or a payment provider (PP) is generally a content provider (CP). The main product of the payment provider is the transaction. The payment provider sells the option of selling goods or connection time via public networks to the content provider. The instrument is called payment transaction. In order to fulfill this offer the payment provider must handle transaction and session management mechanisms, which can intersperse the desired invoices of the content provider.

The transactions are done with the help of existing payment instruments or billing services. The payment provider sets the content provider free from the necessity to develop payment and invoicing schemes. The complexity of the applicable sub services varies and enables the payment provider to offer further integration of services such as application service providing (ASP) or transport services (IP).

Today there exists no universal method to offer and charge for premium content or arbitrary services on the Internet in a technology-independent way. With the present distribution of premium content, the industry faces the following problems:
1. How to enforce protection of premium content against unwarranted access for different usage scenarios?
   (E.g. offline: digital rights management, online: conditional access, offline and online: bundling with hard-goods)?
2. How to enable dedicated access policies?
   (E.g. anonymity and privacy, managed corporate access, vouchers)
3. How to reach buyers in foreign regions?
   (Existing solutions support only a limited number of possible payment-instruments)
4. How to gain platform independence regarding the type of the content, the content server and the platform of the consumers (e.g. mobile, TV, PDA, PC...)? (Due to converging media services one premium content should be able to use many channels)
5. Only limited measures of the consumed content is possible, how to manage sessions of premium content usage beyond pay-per-view?
   (E.g. time, volume, event)?

The object of the present invention is therefore to provide software and hardware, i. e. elements of a clearing network for controlling the delivery of content from a content provider to a consumer in association with payment services in a communication network, such as the internet, in which the above described goals are met.

The above object is achieved by a session management software for managing the delivery of content from a content provider to a consumer in association with payment services in a communication network according to claim 1. The session management software, when loaded in a memory of a session manager computer system, is adapted to perform the following steps: Receiving a content request from a consumer, generating a session token for said consumer depending on budget information relating to a content delivery budget for said consumer and transmitting said session token to said consumer

Hereby, the use of a session token, i. e. a ticket or a message giving a consumer authorization to access one single content delivery session, allows to deliver content over the network independent from billing or payment systems and from conditional access modules. Particularly, the identity of the consumer does not have to be disclosed to the content provider. After the communication and negotiation of the consumer with the correspondingly selected payment service, the payment service gives a feedback information, on the basis of which a session authorization in form of the session token is generated and transmitted to the consumer. Using the session token the consumer then has authorized access to the selected and purchased content. Further, the use of the session token allows to freely and independently customize the content delivery to a consumer in relation to the duration in time (from seconds to years), in relation to charging (from once over rechargeable to recurrent), in relation to the personalization (from anonymous over personalized to corporate) and in relation to the authorization (pre-authorization and post-authorization). Pre-authorization is a token presentation before the content consumption and post-authorization is content consumption followed by token de-charging.

Further advantageous embodiments are claimed in the respective subclaims.

Advantageously, upon receiving said content request from said consumer, said session token is only generated and dispensed to said consumer if said budget information indicates a positive budget status, further advantageously, the session token is only applicable for a single session. Further advantageously, the budget information is comprised in a digital access right token generated and managed by a server side ticket software. In this case, the budget information may comprise digital access right budget information and session budget information. Further, the digital access right token supports two or more simultaneous sessions.

Further, upon determination of the session a termination information is advantageously forwarded to said ticket dispenser software to update the digital access right token correspondingly. Further advantageously, upon generation of the session token an access rule is generated and forwarded to a conditional access gauge for controlling the delivery of content to the consumer.

The present invention further relates to a session management apparatus, i. e. a session management computer system, for managing the delivery of content from a content provider to a consumer in association with payment services in a communication network, comprising a session management software having one or more of the features described above.

The present invention further relates to a ticket dispenser software for managing budget information relating to a budget for the delivery of content from a content provider to a consumer in association with payment services in a communication network according to claim 10, whereby said ticket dispenser software when loaded in a memory of a ticket dispenser computer system is adapted to perform the following steps: Receiving an initial offer request from a consumer, generating a digital access right token, and forwarding a payment information about one or more payment links to the consumer. Advantageously, the digital access right token is initially tagged as uncharged. Hereby, the digital access right token is advantageously tagged as charged after receiving a positive status information indicating a successful communication between the consumer and a payment service. Further advantageously, after receiving an authorization request from a session management software the budget status of the digital access right token is checked and a corresponding budget information is forwarded to the session management software.

The present invention further relates to a ticket dispenser apparatus i. e. a ticket dispenser computer system for managing budget information relating to a budget for the delivery of content from a content provider to a consumer in association with payment services in a communication network, comprising ticket dispenser software having one or more of the features described above.

The above object and the above described goals are further achieved by a broker software for managing transactions and billing in relation to the delivery of content from the content provider to a consumer in association with payment services in a communication network according to claim 15, said broker software, when loaded in a memory of a broker computer system, being adapted to perform the following steps: Connecting and registering devices on the content provider side for managing the delivery of content to a consumer and on the payment services side for controlling billing operations. Thus, the broker software according to the present invention controls and registers the billing and money collection transactions in the content delivery system. Advantageously, a broker record is provided in which transactions between customers and payment service are recorded and on the basis of which financial transactions to content providers are controlled. Advantageously, the broker record comprises service broker and payment broker information.

The present invention further relates to a broker apparatus, i. e. a broker computer system, for managing transactions and billing in relation to the delivery of content from a content provider to a consumer in association with payment services in a communication network, comprising broker software with one or more of the features described above.

Further, the above described goals and objects are achieved by a computer software for controlling and managing the delivery of content from a content provider to a consumer in association with payment services in a communication network according to claim 19. Said computer software, when loaded in one or more memories of one or more computer systems of the communication network is adapted to perform the following steps: Transmitting a content request from a consumer to a server side ticket management software, generating a session token for said consumer in response to said content request depending on budget information relating to a content delivery budget for the consumer, and transmitting said session token to said consumer in order to start a session.

A computer software according to the present invention is thus a modular software to be installed in different servers, computers or apparatuses of the communication network, such as the session management, the broker, the server side ticket apparatus, a transaction interface server between the broker and a payment service and the like, so that a clearing network is formed.

Advantageous features are claimed in the respective subclaims.

Advantageously, upon receiving a content request from the consumer, said session token is only generated and dispensed to the consumer if said budget information indicates a positive budget status. Further advantageously, the session token is only applicable for a single session. Further, after receiving an initial offer request from a consumer a digital access right token comprising a budget status information is advantageously generated and a payment link information about one or more payment links is forwarded to the consumer. Advantageously, the budget information comprises digital access right budget information and session budget information. Further advantageously, the digital access right token supports two or more simultaneous sessions.

Further, the digital access right token may initially be tagged as uncharged. Further advantageously, the consumer communicated with a selected payment service whereby the selected payment service issues a positive status message to the consumer and a positive status message used as a basis for said budget information to charge said digital access right token. Further advantageously, upon receiving a content request from the consumer, said session token is only generated and dispensed to the consumer if the digital access right token has been authorized on the basis of the budget information. Further advantageously, the digital access right token is dispensed from and managed by a ticket dispenser software. Further advantageously, a broker software is provided which connects and registers devices on the content provider's side for managing the delivery of content to a consumer and on the payment service's side for controlling billing operations. In this case the broker software may provide a broker record in which transactions between consumers and payment services are recorded and on the basis of which financial transactions to content providers are controlled. The broker record may comprise service broker and payment broker information. Further advantageously, upon generation of the session token, an access rule is generated and forwarded to a conditional access gauge for controlling the delivery of content to the consumer.

In the following description, the present invention is further explained on the basis of advantageous embodiments in relation to the enclosed drawings, in which
FIG. 1 illustrates a conceptual view on the system
FIG. 2 illustrates an information view on the system
FIG. 3 illustrates the deployment of the system
FIG. 4 illustrates an example of a transaction flow
FIG. 5 Sequence diagram: (I) Charging, (II) Start, (III) Session, (IV) Stop, (V) Billing
FIG. 6 Sequence diagram: (Ia) FSP remote, (Ib) Broker remote, (Ic) Broker local, (Id) FSP local, (Ie) CP local
FIG. 7 Sequence diagram: Mapping URN-2-URI
FIG. 8 Sequence diagram: Starting subsequent services

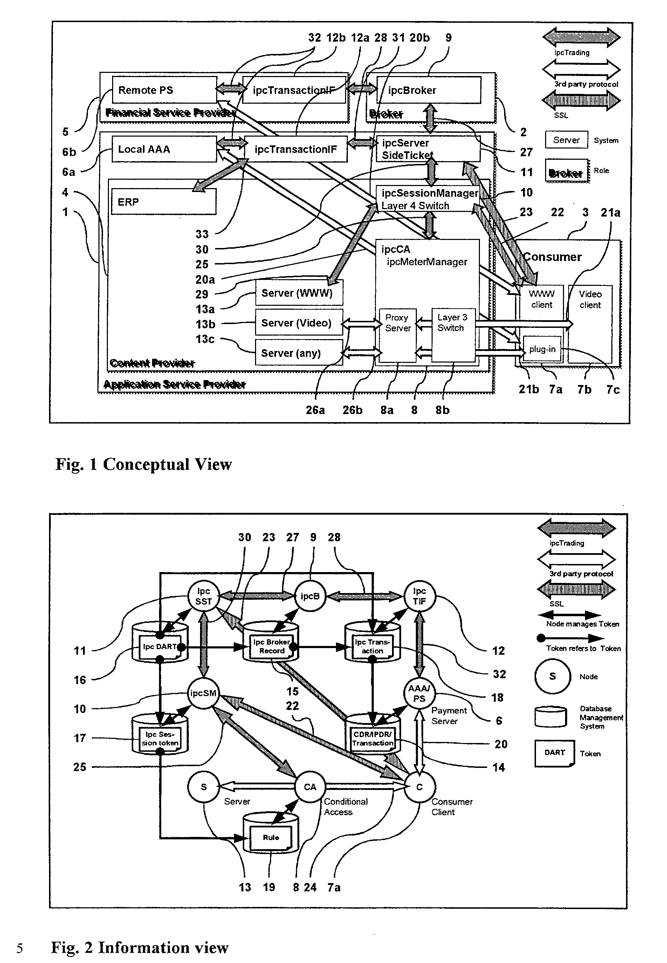

The invention is a distributed system to be deployed in different organizational domains. The domains are owned by different roles. The conceptual view, refer to Fig.1, shows which roles are involved and which components have to be deployed by a respective role. In real world some of these roles can be merged and be represented by a single legal entity and realized in a common computer or server system.

Components that are important modules of the invention are marked with a trailing ,,Ipc showing that they enable Internet premium content.

**Table 1**

| **Role description** | | |
|---|---|---|
| **Abb.** | **Role** | **Description** |
| ASP | Application Service Provider 1 | An Application Service Provider 1has the option to run a Service dedicated Internet premium content (Ipc) module to convert his Provider 1 registered customer base to a payment instrument: |
| | | (a) Ipc transaction interface (Ipc TIF) 12. Additionally he may offer payment services to hosted content provider with the help of: |
| | | (b) Ipc ticket dispenser (Ipc TD) 11 |
| B | Broker 2 | A Broker 2 runs: |
| | | (a) Ipc Broker (Ipc B) 9 |
| | | A service of Ipc Broker 9 is to register Ipc Ticket Dispenser 11 and Ipc Transaction Inter Face 12. This enables Ipc Ticket Dispenser 11 to use all registered Ipc Transaction Inter Face 12 for charging purposes. The broker receives a royalty for each brokered transaction. |
| C | Consumer 3 | Person who owns a regular multimedia-enabled Computer with Web Browser connected to the Internet |
| CP | Content Provider 4 | The content provider 4 runs classic content servers. In order to monetize his content the content provider 4 installs additional Internet premium content (Ipc ) modules: |
| | | (a) Conditional access or Digital Rights Management (DRM) or Shop system |
| | | (b) Ipc session manager (Ipc SM) 10 |
| | | (c) Ipc ticket dispenser (Ipc TD) 11 |
| FSP | Financial Service Provider 5 | The Financial Service Provider 5 acquires the Broker 2 as regular customer of his services. |

With the help of ,,Ipc ,, modules the existing classic or proprietary client and server entities are integrated into a token-based premium content delivery platform.

The tokens of this invention are charged with the help of existing classic or proprietary
- Authentication, Authorization and Accounting (AAA) entities, known from deployment by carriers, or
- Payment server entities, known from deployment by online retail shops.

This approach helps to stick with known and accepted online services as solution base for a premium service as well as to stick with existing and accepted billing or payment services as source for token charging.

**Table 2**

| **Component description** | | |
|---|---|---|
| **Abb.** | **Component** | **Function** |
| AAA/ PS | Authentication, Authorization, and Accounting 6 | AAA 6 is a term to describe the core functionality of billing engines as applied by ASP 1, carrier and CP 4. PS is the term for payment server of FSP 5. (a) AAA - in-house, local, to provider for registered customers, (b) PS - external, remote, to provider for unknown consumers. Goal: monetizing content. |
| C | Client 7 | Consumer premises soft- and hardware , classic media clients 7: (a) WWW-client, (b) Video-client. Goal: service consumption. |
| CA | Conditional Access 8 | Conditional access 8 is a system with the goal to: (a) support for retail of communication services, e. g. Set Top Boxes (STB) (b) support for retail of tangible goods, e. g. online shop systems (c) support for copyright management, e. g. DRM solutions |
| Ipc B | Ipc broker 9 | Ipc broker 9 is an infrastructure for a cross border connection to payment instruments, when the local payment instruments 6a fails or when no local payment instrument 6a is implemented. The task of Ipc broker 9 is to enlarge the reach of buyers for content provider 4. Ipc broker 9 maintains a list of registered Ipc transaction interfaces 12 and communicates it to Ipc session manager 10 and Ipc ticket dispenser 11. Ipc Broker Ipc broker 9 is an agent of the broker 2. Ipc broker 9 reports all ipc transactions 18 and is responsible for clearing and refunding |
| | | of content providers. Ipc broker is either (a) local or (b) remote to Ipc ticket dispenser 12 or ipc transaction interface 11. If it is local to Ipc ticket dispenser, it collects the service brokerage fee. If it is local to Ipc transaction interface, it collects the payment brokerage fee. The Ipc Broker 9 provides a broker records which are dedicated to service brokerage and/or payment brokerage. Hereby, one broker might broker services and payments. The separation of the brokerage enables a cross border interaction of brokers, e.g. if a US based broker with a registered content provider cooperates with a Japan based broker with a registered regional payment service. |
| Ipc SM | Ipc Session Manager 10 | Ipc session manager 10 is an IP based interoperable and universal system to accurately measure Internet content use from the beginning to the end of a session by: "time", "volume", "event ". It initiates and terminates the session for "consuming premium digital content. Ipc session manager 10 acts as conductor checking the budget of an Ipc Digital Access Right Token 16 on consumer 3 request to start a premium content session. Ipc session manager 10 tells conditional access systems the rules 9 to authorize access |
| IpcSST | Ipc Ticket Dispenser 11 | The Ipc Ticket Dispenser 11 acts as token dispenser. It dispenses and manages the Ipc Digital Access Right Token 16 for the consumer 3. The Ipc Ticket Dispenser 11 manages the Ipc Digital Access Right Token 16. The Ipc Ticket Dispenser 11 is an agent of the content provider 4. It reports to the content provider 4 the amount due from the broker 2. It requests charging from Ipc Transaction Inter Face 12. It signals Ipc Session Manager 10 budget constraints for Ipc Session Token 17. |
| Ipc | Ipc Transaction | The Ipc transaction interface 12 encapsulates proprietary transactions, IPDRs or CDRs 14 as generated by proprietary |
| TIF | Interface 12 | AAA or payment service 6 delivering a uniform ipc transaction 18 to Ipc clearing network. The Digital Access Right Token 16 is the merchandise of an Ipc transaction interface 12. The financial service provider 5 views upon Ipc transaction interface 12 as shop system. Ipc transaction interface 12 is an agent of the broker 2. The broker 2 may own several Ipc transaction interfaces 12. Ipc transaction interface 12 reports its ipc transactions 18 to Ipc broker 2. An ipc transaction interface 12 may be (a) remote or (b) local to ipc ticket dispenser 11. It is local to it, if it is registered to the same ipc broker 9. |
| S | Server 13 | Content provider 4 premises soft- and hardware. Classic servers 13 are WWW-server 6a, video server 6b, audio server, Mail-server and Game-server. Goal: content provisioning. |

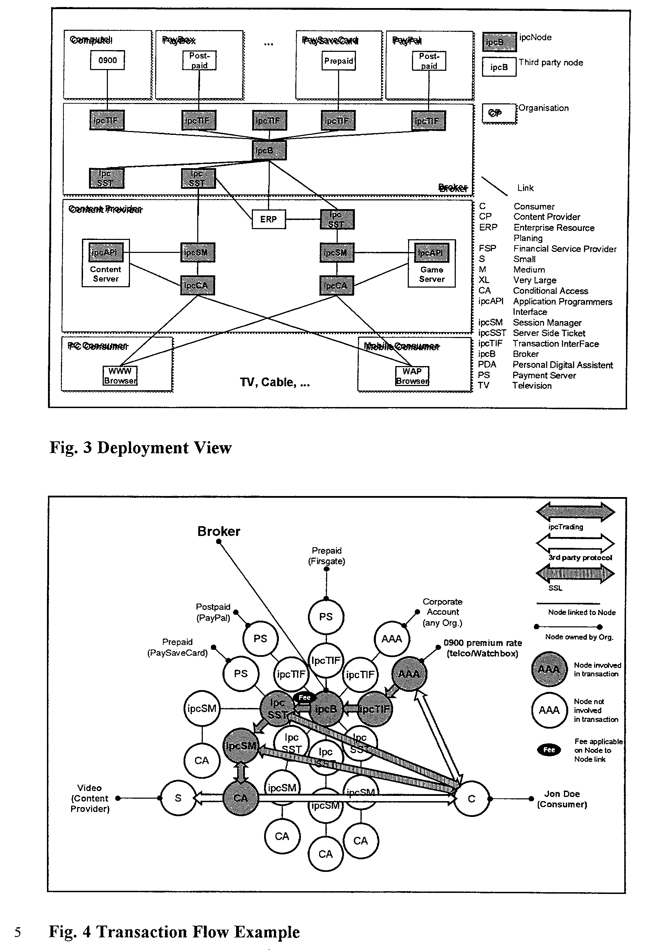

The components of the system perform message exchange as shown in the information view in Fig. 2.

The key information entity for Consumer (C) is the Digital Access Right Token (DART). The DART 16 is the merchandise of Ipc Transaction Inter Face 12 that encapsulates an authentication, authorization, and accounting system or a payment server (PS) 6. The Digital Access Right Token 16 may be referred to in a recurrent manner. The Digital Access Right Token 16 represents the service receipt after budget expiry. The Digital Access Right Token 16 carries the content provider's 4 corporate identity and supports service sales and distribution. A Digital Access Right Token 16 was charged if a related Transaction 18 exists (= is stored). Many Transactions 18 of different payment instruments may charge a Digital Access Right Token 16. A Digital Access Right Token 16 memorizes or recognizes all Session Token's 17 issued in consumption phases. A Session Token 17 is pointing to a DART 13. A Session Token 16 memorizes Rules 19 issued. After expiry a Session Token 17 might be used to retrieve a still charged Digital Access Right Token 16.

The key information entity for the Ipc Broker 11 is the Ipc Broker Record 9. The Ipc Broker Record 15 is evaluated during a content provider 4 billing cycle. The Ipc Broker Record 15 memorizes Ipc Digital Access Right Token 16 and payment instrument.

**Table 3**

| **Information description** | | |
|---|---|---|
| **Abb.** | **Record** | **Description** |
| CDR/ IPDR/ T | Call Detail Record/Transaction 14 | A record as generated by: (a) a 3^{rd} party carrier or a telecom, e.g. a call detail record of a value added service (0900) (b) a 3^{rd} party clearing network, e.g. credit card organization or bank. |
| Ipc BR | Broker Record 15 | A broker record 15 as generated by ipc broker 9 receiving revenue from one of its registered Ipc transaction interfaces 12. Monthly billing cycles split revenues to a content provider pay-off and a royalty fee for (a) payment brokerage and (b) service brokerage. A broker record 15 may comprise payment and service broker information. |
| Ipc DAR T | Digital Access Right Token 16 | A Digital Access Right Token 16 as negotiated by Ticket Dispenser 11 with Client 7 then forwarded to Ipc Transaction Interface 12 for charging. A Digital Access Right Token 16 may represent a simple access right e.g. a one time entry ticked to complex access rights e.g. corporate account, storing basic authentication information and budget policies |
| Ipc ST | Session Token 17 | An ipc session token 17 is generated by Ipc Session Manager 10 and authorized by Ipc Ticket Dispenser 11 based on a budget represented by one of its managed Digital Access Right Tokens 16. The ipc Session Token 17 is applicable only once. The Session Token 17 is unique and can refer to a Digital Access Right Token 16 ever after. A Session Token 17 is due to consumer book marking and therefore has to fulfill consumer needs like session reentry, service memorizing, service receipt |
| | | memorizing and service advertising |
| Ipc T | Ipc Transaction 18 | A transaction record 14 as generated by state of the art payment servers 6 for a merchant system here represented by Ipc Transaction Inter Face 12. The merchandise of Ipc Transaction Inter Face 12 is the Digital Access Right Token 16 |
| R | Rules 19 | Ipc Session Manager 10 issues rules 19 to conditional access modules 8, shop systems or Digital Right Management Systems. Rules 19 are module specific |

The system has 5 different stages:
**I Charging**
   A Digital Access Right Token 16 is generated by Ipc Ticket Dispenser 11 and charged by Ipc Transaction Inter Face 12
**II Start**
   A Session Token 17 is generated by Ipc Session Manager 10, based on the budget status of a Digital Access Right Token 16
**III Session**
   A session is encapsulated by an HTTP session. The HTTP session is a sequence of web pages generated by get-requests based on URLs containing Session Tokens 17.
**IV Stop**
   On budget expiry warning related to a Session Token 17 the Ipc Session Manager 10 tries to recharge the Session Token 17 with the help of an originating Digital Access Right Token 16.
   On budget expiry warning related to a Digital Access Right Token 16 the Ipc Session Manager 10 offers to recharge the Digital Access Right Token 16 with the help of an originating broker record or transaction.
   On budget expiry Ipc TD 11 displays the expired Digital Access Right Token 16 converted to a session receipt.
   On receipt archiving expiry Ipc TD 11 displays the expired session receipt converted to a service promotional advertisement.
**V Clearing (Billing)**
   During a billing cycle all broker records become aggregated to content provider 4 pay-off statements. Only settled broker records are considered.

The coarse processing steps related to message flow are shown by arrows in Fig. 2. The semantics of these steps are related to phases as follows:
**I Charging**
   1) Ipc TD 11 negotiates Digital Access Right Token 16 with Client 7a
   2) Ipc TD 11 delivers Digital Access Right Token 16 for charging to authentication, authorization, and accounting or Payment Server 6 encapsulating Ipc Transaction Inter Face 12
   3) Payment Server 6 collects money from Client 7a or authentication, authorization, and accounting generates CDR for Client's account
   4) authentication, authorization, and accounting or Payment Server 12 encapsulating Ipc Transaction Inter Face 12 records transaction
   5) Ipc B 9 records brokerage (optional)
   6) Digital Access Right Token 16 managing Ipc Ticket Dispenser 11 matches transaction 16 with Digital Access Right Token 16
**II Start**
   7) Ipc Session Manager 10 generates session token
   8) Ipc Session Manager 10 delivers rules to conditional access
**III Session**
   9) media flow from Server 13 to Client 7a enabled by conditional access module or shop system
**IV Stop**
   10) Ipc Session Manager 10 requests Set Top Box to flush rules
**V Clearing (Billing)**
   11) Ipc B analyses broker records and generates content provider pay-off message

The pay-off message will use dedicated channels in most cases to reach classic content provider's bank accounts. In some cases a content provider may request real time refund with the help of an Internet based real time payment solution both applicable for consumer and content provider.

The following table lists the communication relations between the various entities shown in Fig. 1 and 2:

**Table 4**

| **Communication Relations** | | |
|---|---|---|
| **Abb.** | **Communication Relation** | **Description** |
| C : AAA/PS | Client to Billing Engine or Payment Server 20 | Proprietary authorization/payment workflow: (a) local AAA 6a: authorization by proprietary transaction (b) remote PS 6b: money collection by proprietary transaction very likely the remote PS is encapsulated by ipcTD 11 Goal: Money collection from Consumer 3 |
| C : CA | Client to Conditional Access 21 | Conditional access 8 by proxy server (a) video-client 7b to proxy-server 13b (b) plug-in 7c to proxy-server 13c Goal: protected channels for premium content |
| C : ipcSM | WWW Client to ipc Session Manager 22 | Session management by WWW-proxy-server 10 Goal: collect info for state-full inspection by CA 8 |
| C : ipcDT | Client to ipc Server Side Ticketing 23 | Ticket trading and management workflow Goal: Trading tickets |
| C : S | Client to Server 24 | Direct client 7 server 13 communication, used for free of charge content. Direct communication for premium and protected content is not possible. |
| CA : ipcSM | Conditional Access to ipc Session Manager 25 | Conditional access 8 management Goal: Management of CA 8 by ipc SM 10, event notification from CA 8 to ipc SM 10 |
| CA : S | Conditional Access to Server 26 | conditional access 8 controlled client server |
| | | communication (a) proxy-server 8a to video server 13b (b) proxy-server 8a to any server 13c Goal: Delivery of protected premium content |
| ipcB : ipcDT | ipc Broker to ipc Dispenser Ticket 27 | Ticket charging (indirect modus) Goal: Notification of ipc transactions 18 to clearing center 9 |
| ipcB : ipcTIF | ipc Broker to ipc Transaction Interface 28 | Clearing information management Goal: Content provider 4 pay off by internet payment service or legacy system, revenue splitting, ticket charging |
| ipcSM : S | ipc Session Manager to Server 29 | WWW-proxy 10 to WWW-server 13a Goal: Delivery of protected premium WWW content |
| ipcSM : ipcDT | ipc Session Manager to ipc Server Side Ticketing 30 | Transparent ipc session management Goal: Capture session budget from DART 16 budget |
| ipcTD : ipcTIF | ipc Ticket Dispenser to ipc Transaction Interface 31 | Order info and ticket charging (direct modus), either ipcTD 11 acts as AAA 6 or ipcTIF 12 issues charging notification simultaneous to ipcB 9 and ipcTD 11 Goal: DART 16 charging |
| ipcTIF : AAA/PS | ipc Transaction Interface to Billing Engine or Payment Server 32 | Order info presentation to payment or billing entity 6 Goal: Encapsulation of proprietary money collection transactions 14 by ipc Transaction 18 |
| ipcTIF : ERP | ipc Transaction Interface to Entreprise Resource Planing 33 | CP 4 pay off by internet payment service 6 or structured message (e.g. Electronic Data |
| | | interchange, EDI) to Enterprise Resource Planing (ERP) system Goal: Refund content provider 4 |

Fig. 3 shows deployment options of the Ipc Nodes. In order to reach high availability by fault tolerance every communication relation is set up in a redundant manner. Three levels of scalability are available for content providers:
- simple conditional access for online consultants or shop systems with broker based Digital Access Right Token 16 management
- scaled conditional access for small content providers with broker based Digital Access Right Token 16 management
- scaled conditional access for large content providers with content provider based Digital Access Right Token 16 management

Two options for payment or authentication, authorization, and accounting encapsulations are available for financial service providers:
- broker based payment or authentication, authorization, and accounting encapsulation
- financial service provider based payment or authentication, authorization, and accounting encapsulation

Fig. 4 shows a possible path of a transaction consisting of consumption and a payment action through the system. The figure demonstrates how the system can - along with other service providers - insert its service in the online content delivery process of consumers and content providers. There are many optional transaction paths as shown by the non-hatched nodes. The different nodes may represent different operator domains that are economically and legally independent of each other. Most of the message flows can be handled direct and simultaneous.

### Sequence diagram overview on phases

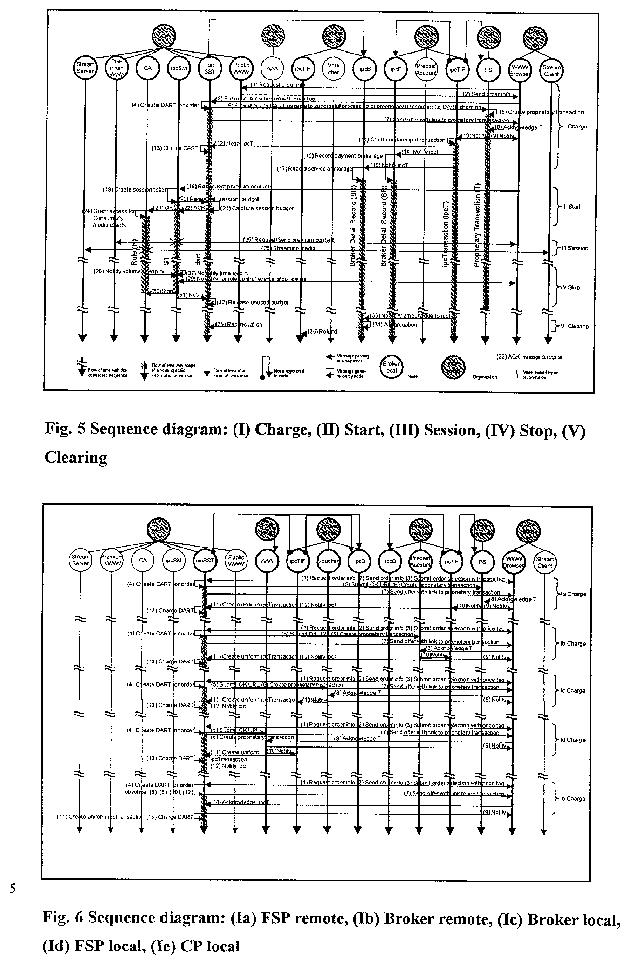

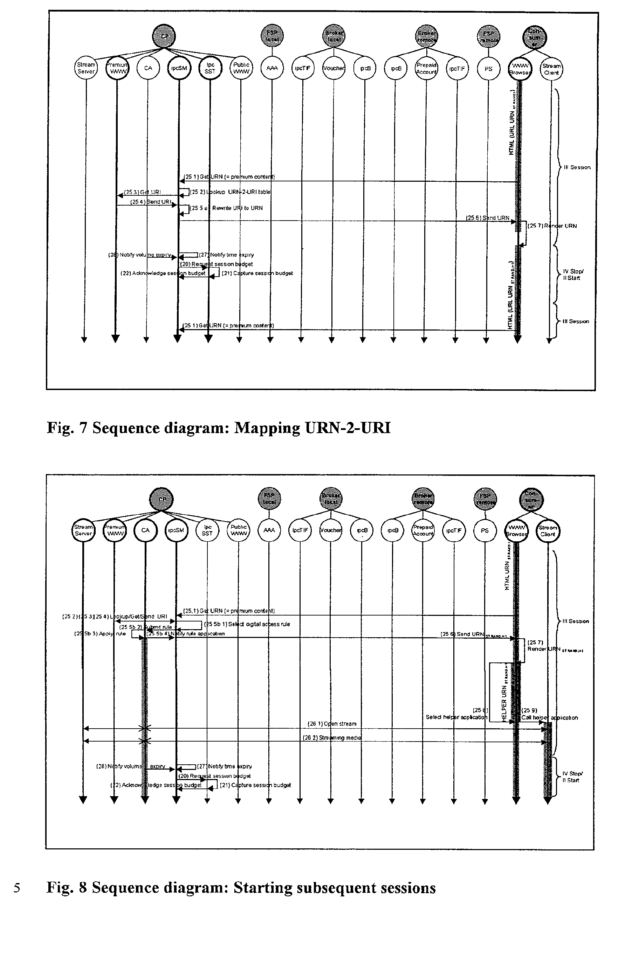

Fig. 5 Sequence diagram: (I) Charging, (II) Start, (III) Session, (IV) Stop, (V) Clearing
*(I) Charging*
   **01 Consumer 3 (WWW browser 7a):** Requests order info from public *WWW* service 13a of content provider 4.
   **02 Content provider 4 (public WWW service 13a):** Send order info to WWW browser 7a of consumer 3 pointing to Ipc ticket dispenser 11 of content provider 4.
   **03 Consumer 3 (WWW browser 7a):** Submit order selection with price tag to ticket dispenser 11 of content provider 4.
   **04 Content provider 4 (Ipc ticket dispenser 11):** Create digital access right token (DART) 16 flagged as uncharged and linked to order.
   **05 Content provider 4 (Ipc ticket dispenser 11):** Submit link to DART 16 as reply on successful processing of DART 16 charging to payment server 6 of remote financial service provider 5.
   **06 Remote financial service provider 5 (Payment server 6):** Create proprietary transaction 14.
   **07 Content provider 4 (Ipc ticket dispenser 11):** Send offer with link to proprietary transaction 14 to WWW browser 7a of consumer 3.
   **08 Consumer 3 (WWW browser 7a):** Submit acknowledgement for proprietary transaction 14 to payment server 6 of remote financial service provider 5.
   **09 Remote financial service provider 5 (Payment server 6):** Post notification on successful charging to WWW browser 7a of consumer 3.
   **10 Remote financial service provider 5 (Payment server 6):** Post notification on successful charging to ipc transaction interface 12 of remote broker 9. (See also detailed description about alternative payment options by payment switching in Fig. 6 Sequence diagram: (Ia) Remote financial service provider, (Ib) Remote broker, (Ic) Local broker, (Id) Local financial service provider, (Ie) Content provider)
   **11 Remote broker 9 (ipc transaction interface 12b):** Create uniform ipc transaction 18.
   **12 Remote broker 9 (ipc transaction interface 12b):** Subtracts payment brokerage fee from ipc transaction 18. Subtracts service brokerage fee from ipc transaction 18. Notify DART 16 transaction to Ipc ticket dispenser 11 of content provider 4.
   **13 Content provider 4 (Ipc ticket dispenser 11):** Charge DART 16.
   **14 Remote Broker 9 (ipc transaction interface 12b):** Notify payment brokerage 15a with payment brokerage fee to ipc broker 9 of remote broker 2b.
   **15 Remote broker 2b (ipc broker 9):** Create record on payment brokerage 15a.
   **16 Remote broker 2b (Ipc transaction interface 12b):** Notify service brokerage 15b with service brokerage fee to ipc broker 9 of local broker 2a.
   **17 Local broker 2a (Ipc broker 9):** Create record on service brokerage 15b.
*(II) Start*
   **18 Consumer 3 (WWW browser 7a):** Request premium content from Ipc session manager 10 of content provider 4.
   **19 Content provider 4 (Ipc session manager 10):** Create ipc session token 17.
   **20 Content provider 4 (Ipc session manager 10):** Request session budget from Ipc ticket dispenser 11 of content provider 4.
   **21 Content provider 4 (Ipc ticket dispenser 11):** Capture session budget. It is to be noted that a digital access right budget and a session budget are available. The digital access right token thus may support many simultaneous sessions, e.g. if a consumer wants to share his ticket with one or more further consumers.
   **22 Content provider 4 (Ipc ticket dispenser 11):** Acknowledge session budget to Ipc session manager 10 of content provider 4.
   **23 Content provider 4 (Ipc session manager 10):** Request access for media clients of consumer 3 from conditional access 8 of content provider 4.
   **24 Content provider 4 (Conditional access 8):** Grant access for media clients 7 of consumer 3.
*(III) Session*
   **25 Consumer 3 (WWW browser 7a):** Request premium content/receive premium content.
   **26 Content provider 4 (Stream server):** Media stream addressing streaming client 7b of consumer 3.
      See also detailed description of Fig. 7 Sequence diagram: Mapping URN-2-URI and Fig. 8 Sequence diagram: Starting subsequent sessions
*(IV) Stop*
   **27 Content provider 4 (Ipc session manager):** Notify time expiry.
   **28 Content provider 4 (Conditional access):** Notify volume expiry to Ipc session manager of content provider 4.
   **29 Consumer 3 (WWW browser 7a):** Notify remote control event to Ipc session manager of content provider 4.
   **30 Content provider 4 (Ipc session manager 10):** Request conditional access 8 to drop rules 19 representing access rights related to session token 17.
   **31 Content provider 4 (Ipc session manager):** Notify session termination to Ipc ticket dispenser 11 of content provider 4.
   **32 Content provider 4 (Ipc ticket dispenser):** Release captured but unuse session budget.
*(V) Clearing*
   **33 Remote Broker 2b (ipc transaction interface 12b):** Notify amount due related to DART 16 charging to Ipc broker 9 of local broker 2a.
   **34 Local Broker 2a (ipc broker 9):** Create bills with aggregated credit statements addressing content provider 4.
   **35 Local Broker 2a (ipc broker 9):** Reconciliation information to ipc ticket dispenser 11 of content provider 4.
   **36 Local Broker 2a (ipc broker 9):** Credit content provider 4 via Ipc transaction interface 12 of local broker 2a.

### Payment Switching

Fig. 6 Sequence diagram: (Ia) FSP remote, (Ib) Broker remote, (Ic) Broker local, (Id) FSP local, (Ie) CP local
(Ia) FSP remote
   **WWW Browser:** issues an http-get request to ipcSM for a payment link.
   **IpcSM:** simultaneously generates an ipcDART and issues an http-get reply to WWW Browser with a payment link for ipcDART.
   **WWW Browser:** issues an http-get request to **PS/FSP remote** for payment acknowledgment for ipcDART.
(Ib) Broker remote
   **WWW Browser:** issues an http-get request to ipcSM for a payment link.
   **IpcSM:** simultaneously generates an ipcDART and issues an http-reply to WWW Browser with a payment link for ipcDART.
   **WWW Browser:** issues an http-request to **PS/Broker remote** for payment acknowledgment for ipcDART.
(Ic) Broker local
   **WWW Browser:** issues an http-get request to ipcSM for a payment link.
   **IpcSM:** simultaneously generates an ipcDART and issues an http-reply to WWW Browser with a payment link for ipcDART.
   **WWW Browser:** issues an http-get request to **PS/Broker local remote** for payment acknowledgment for ipcDART.
(Id) FSP local
   **WWW Browser:** issues an http-get request to ipcSM for a payment link.
   **IpcSM:** simultaneously generates an ipcDART and issues an http-reply to WWW Browser with a payment link for ipcDART.
   **WWW Browser:** issues an http-get request to **PS/FSP local** for payment acknowledgment for ipcDART.
(Ie) CP local
   **WWW Browser:** issues an http get request to ipcSM for a payment link.
   **IpcSM:** simultaneously generates an ipcDART and issues an http-reply to WWW Browser with a payment link for ipcDART.
   **WWW Browser:** issues an http-get request to **PC/CP local remote** for payment acknowledgement for ipcDART.
   **HTTP as session wrapper** Fig. 7 Sequence diagram: Mapping URN-2-URI

**25.1 Consumer 3 (WWW browser 7a):** Request premium content by unique resource name (URN) from ipc session manager 10 of content provider 4.
**25.2 Content provider 4 (ipc session manager 10):** Perform mapping from URN to unique resource identifyer (URI) with the help of session token 17 and random number. Return URI or error if URI not found due to client side URN guessing or session budget expiry or URN invalid due to multiple access.
**25.3 Content provider 4 (ipc session manager 10):** Get URI from premium WWW service 13a of content provider 4.
**25.4 Content provider 4 (premium WWW service 13a):** Send URI to ipc session manager 10 of content provider 4.
**25.5.a Content provider 4 (ipc session manager 10):** Rewrite HTML code of URI to HTML code of URN by replacing all URIs with URNs. Create URNs from tuples of session token and random number. Memorize the tuple of URI and URN in a URN-2-URI map.
**25.6 Content provider 4 (ipc session manager 10):** Send URN to WWW browser 7a of consumer 3.
**25.7 Consumer 3 (WWW browser 7a):** Render HTML code of URN.
**27 Content provider 4 (ipc session manager 10):** Notify time expiry.
**28 Content provider 4 (ipc conditional access 8):** Notify volume expiry to ipc session manager 10 of content provider 4.
**20 Content provider 4 (ipc session manager 10):** Request session budget from ipc ticket dispenser 11 of content provider 4.
**21 Content provider 4 (ipc ticket dispenser 11):** Capture session budget.
**22 Content provider 4 (ipc ticket dispenser 11):** Acknowledge session budget to ipc session manager 10 of content provider 4.
   **[Loop 25.1]**

### Subsequent sessions

Fig. 8 Sequence diagram: Starting subsequent sessions
**25.1 Consumer 3 (WWW browser 7a):** Request premium content by unique resource name (URN) from ipc session manager 10 of content provider 4.
**25.2 Content provider 4 (ipc session manager 10):** Perform mapping from URN to unique resource identifyer (URI) with the help of session token 17 and random number. Return URI or error if URI not found due to client side URN guessing or session budget expiry or URN invalid due to multiple access.
**25.3 Content provider 4 (ipc session manager 10):** Get URI from premium WWW service 13a of content provider 4.
**25.4 Content provider 4 (premium WWW service 13a):** Send URI to ipc session manager 10 of content provider 4.
**25.5b.1 Content provider 4 (ipc session manager 10):** Select or create digital access rule based on client side communication parameters like mime type, source, destination and meter policy.
**25.5b.2 Content provider 4 (ipc session manager 10):** Submit rule to conditional access 8 of content provider 4.
**25.5b.3 Content provider 4 (conditional access 8):** Apply rule.
**25.5b.4 Content provider 4 (conditional access 8):** Notify rule application to ipc session manager 10 of content provider 4.
**25.6 Content provider 4 (ipc session manager 10):** Send premium content of URN to WWW browser 7a of consumer 3.
**25.7 Consumer 3 (WWW browser 7a):** Render premium content of URN.
**25.8 Consumer 3 (WWW browser 7a):** Select helper application based on type of multi-purpose Internet mail extensions (MIME) of URN.
**25.9 Consumer 3 (WWW browser 7a):** Call helper application, e.g. streaming media client 7b.
**26.1 Consumer 3 (streaming media client 7b):** Open stream from streaming server 13b of content provider 4.
**26.2 Consumer 3 (streaming media client 7b):** consume and control streaming media from streaming server 13b via conditional access 8 of content provider 4.
**27 Content provider 4 (ipc session manager 10):** Notify time expiry.
**28 Content provider 4 (ipc conditional access 8):** Notify volume expiry to ipc session manager 10 of content provider 4.
**20 Content provider 4 (ipc session manager 10):** Request session budget from ipc ticket dispenser 11 of content provider 4.
**21 Content provider 4 (ipc ticket dispenser 11):** Capture session budget.
**22 Content provider 4 (ipc ticket dispenser 11):** Acknowledge session budget to ipc session manager 10 of content provider 4.

## Claims

1. Session management software for managing the delivery of content from a content provider (4) to a consumer (3) optional via an application service provider (1) in association with payment services in a communication network, whereby said session management software, when loaded in a memory of a session manager computer system, is adapted to perform the following steps:
receiving a content request from a consumer (3),
generating a session token (17) for said consumer (3) depending on budget information relating to a content delivery budget for said consumer, and
transmitting said session token to said consumer (3).

2. Session management software according to claim 1,
**characterized in,**
**that** upon receiving said content request from said consumer (3) said session token (17) is only generated and dispensed to said consumer (3) if said budget information indicates a positive budget status.

3. Session management software according to claim 1 or 2,
**characterized in,**
**that** said session token (17) is only applicable for a single session.

4. Session management software according to claim 1, 2 or 3,
**characterized in,**
**that** said budget information is comprised in a digital access right token (16) generated and managed by a ticket dispenser software.

5. Session management software according to claim 4,
**characterized in,**
**that** said budget information comprises digital access right budget information and session budget information.

6. Session management software according to claim 4 or 5,
**characterized in,**
**that** said digital access right token supports two or more simultaneous sessions.

7. Session management software according to claim 4, 5 or 6,
**characterized in,**
**that** upon the termination of a session a termination information is forwarded to said ticket dispenser software to update the digital access right token (16) correspondingly.

8. Session management software according to one of the claims 1 to 7,
**characterized in,**
**that** upon generation of said session token (17) an access rule is generated and forwarded to a conditional access gauge (8) for controlling the delivery of content to said consumer (3).

9. Session management apparatus (10) for managing the delivery of content from a content provider (4) to a consumer (3) in association with payment services (6) in a communication network, comprising a session management software according to one of the claims 1 to 8.

10. Ticket dispenser software for managing budget information relating to a budget for the delivery of content from a content provider (4) to a consumer (3) in association with payment services (6) in a communication network, whereby said ticket dispenser software, when loaded in a memory of a server side ticket management computer system, is adapted to perform the following steps:
receiving an initial offer request from a consumer (3),
generating a digital access right token (16), and
forwarding a payment link information about one or more payment links to the consumer (3).

11. Ticket dispenser software according to claim 10,
**characterized in,**
**that** said digital access right token (16) is initially tagged as uncharged.

12. Ticket dispenser software according to claim 11,
**characterized in,**
**that** said digital access right token (16) is tagged as charged after receiving a positive status information indicating a successful communication between said consumer (3) and a payment service (6).

13. Ticket dispenser software according to claim 10, 11 or 12,
**characterized in,**
**that** after receiving an authorization request from a session management software the budget status of said digital access right token (16) is checked and a corresponding budget information is forwarded to said session management software.

14. Ticket dispenser apparatus for managing budget information relating to a budget for the delivery of content from a content provider (4) to a consumer (3) in association with payment services (6) in a communication network, comprising ticket dispenser software according to one of the claims 10 to 13.

15. Broker software for managing transactions and billing in relation to the delivery of content from a content provider (4) to a consumer (3) in association with payment services in a communication network, said broker software, when loaded in one or more memories of one or more broker computer systems, being adapted to perform the following steps: connecting and registering devices on the content provider side for managing the delivery of content to a consumer (3) and on the payment services side for controlling billing operations.

16. Broker software according to claim 15,
**characterized in,**
**that** a broker record (15) is provided in which transactions between consumers (3) and payment services (6) are recorded and on the basis of which financial transactions to content providers (4) are controlled.

17. Broker software according to claim 16,
**characterized in,**
**that** said broker record (15) comprises service broker and payment broker information.

18. Broker apparatus (9) for managing transactions and billing in relation to the delivery of content from a content provider (4) to a consumer (3) in association with payment services (6) in a communication network, comprising broker software according to claim 15, 16 or 17.

19. Computer software for controlling and managing the delivery of content from a content provider (4) to a consumer (3) in association with payment services in a communication network, said computer software when loaded in one or more memories of one or more computer systems of the communication network being adapted to perform the following steps:
transmitting a content request from a consumer (3) to a ticket dispenser software,
generating a session token (17) for said consumer (3) in response to said content request depending on budget information relating to a content delivery budget for said consumer (3), and
transmitting said session token (17) to said consumer (3) in order to start a session.

20. Computer software according to claim 19,
**characterized in,**
**that** upon receiving said content request from said consumer (3) said session token (17) is only generated and dispensed to said consumer (3) if said budget information indicates a positive budget status.

21. Computer software according to claim 19 or 20,
**characterized in,**
**that** said session token (17) is only applicable for a single session.

22. Computer software according to claim 19, 20 or 21,
**characterized in,**
**that** after receiving an initial offer request from a consumer (3) a digital access right token (16) comprising a budget status information is generated and a payment link information about one or more payment links is forwarded to the consumer (3).

23. Computer software according to claim 22,
**characterized in,**
**that** said budget information comprises digital access right budget information and session budget information.

24. Computer software according to claim 22 or 23,
**characterized in,**
**that** said digital access right token supports two or more simultaneous sessions.

25. Computer software according to claim 22, 23 and 24,
**characterized in,**
**that** said digital access right token (16) is initially tagged as uncharged.

26. Computer software according to one of the claims 22 to 25,
**characterized in,**
**that** said consumer (3) communicates with a selected payment service (6a, 6b), whereby said selected payment service issues a positive status message to said consumer (3) and a positive status message used as a basis for said budget information to charge said digital access right token (16).

27. Computer software according to one of the claims 22 to 26,
**characterized in,**
**that** upon receiving said content request from said consumer (3) said session token (16) is only generated and dispensed to said consumer (3) if said digital access right token (16) has been authorized on the basis of said budget information.

28. Computer software according to one of the claims 22 to 27,
**characterized in,**
**that** said digital access right token (16) is dispensed from and managed by a ticket dispenser software.

29. Computer software according to one of the claims 19 to 28,
**characterized in,**
**that** broker software is provided which connects and registers devices on the content provider side for managing the delivery of content to a consumer (3) and on the payment services side for controlling billing operations.

30. Computer software according to claim 29,
**characterized in,**
**that** said broker software provides a broker record (15) in which transactions between consumers (3) and payment services are recorded and on the basis of which financial transactions to content providers (4) are controlled.

31. Computer software according to claim 30,
**characterized in,**
**that** said broker record comprises service broker and payment broker information.

32. Computer software according to one of the claims 19 to 31,
**characterized in,**
**that** upon generation of said session token (17) an access rule (19) is generated and forwarded to a conditional access gauge (8) for controlling the delivery of content to said consumer (3).
